# EUROPÄISCHE PATENTSCHRIFT

(11) **EP 3 427 114 B1**
(45) Veröffentlichungstag und Bekanntmachung des Hinweises auf die Patenterteilung: **26.10.2022**
(21) Anmeldenummer: 17710197.9
(22) Anmeldetag: 08.03.2017
(51) Int. Cl.: G05B 19/418, B25J 9/16, B65G 47/00

(54) **ROBOTERSYSTEM UND VERFAHREN ZUR STEUERUNG EINES ROBOTERSYSTEMS**
ROBOT SYSTEM AND METHOD FOR CONTROLLING A ROBOT SYSTEM
SYSTÈME ROBOTIQUE ET PROCÉDÉ DE COMMANDE D'UN SYSTÈME ROBOTIQUE

(30) Priorität: 08.03.2016 DE 102016002812
(43) Veröffentlichungstag der Anmeldung: 16.01.2019
(73) Patentinhaber: FRANKA EMIKA GmbH, 80797 München (DE)
(72) Erfinder: HADDADIN, Prof. Dr. Sami, 30173 Hannover (DE)
(74) Vertreter: Habermann, Hruschka & Schnabel
(86) Internationale Anmeldenummer: PCT/EP2017/055499
(87) Internationale Veröffentlichungsnummer: WO 2017/153504

(56) Entgegenhaltungen:
- EP-A1- 2 492 055
- EP-A2- 2 784 612
- DE-A1-102005 051 094
- DE-C1- 19 731 656
- US-A1- 2010 198 394
- US-B1- 6 463 360

## Beschreibung

Die vorliegende Erfindung betrifft ein Robotersystem und ein Verfahren zur Steuerung eines Robotersystems.

Robotersysteme sind in den unterschiedlichsten Ausführungen bekannt. Insbesondere im Bereich von Fertigungsstraßen oder Prozesslinien, bei welchen Gegenstände bspw. zu Bearbeitungs-, Sortier- und/oder Verpackungszwecken über aktive oder passive Förderbänder kontinuierlich zwischen einzelnen Arbeitsstationen bzw. Fertigungsmaschinen entlang geführt werden, kommen sogenannte "Pick and Place"- Robotersysteme zum Einsatz.

Diese weisen beispielsweise zumindest einen Roboterarm auf, der die zu bearbeitenden oder zu sortierenden Gegenstände bzw. Produkte von einer Position zu einer anderen Position bewegt. Dabei entnimmt der Roboterarm, an dessen Ende sich ein Greifer bzw. Endeffektor befindet, den Gegenstand beispielsweise aus einem Behältnis und bestückt hiermit eine Werkzeugmaschine oder dergleichen bzw. entnimmt den Gegenstand aus einer solchen und führt diesen einem weiteren Behältnis zu Transportzwecken zu.

Die aus dem Stand der Technik bekannten automatisierten Fließbearbeitungsvorrichtungen bzw. Bearbeitungssysteme für Gegenstände, die sich in diesen mittels eines Fließ- oder Förderbandes fortbewegen, sind stets mit hohen Investitionskosten verbunden, da in der Peripherie davon entsprechende, teilweise angetriebene Zuführ- und Abführeinrichtungen für die Gegenstände vorgesehen werden müssen. Darüber hinaus zeichnen sich derartige Anlagen durch eine geringe Flexibilität aus, was die Bearbeitung unterschiedlicher Arten von Produkten oder Gegenständen angeht.

Ist es nun gewünscht, ein "Pick and Place"-Robotersystem im Bereich einer solchen klassischen Fließbearbeitungsvorrichtung anzuordnen, bspw. zu Zwecken des Verpackens oder Palettierens von Gegenständen, ergeben sich mehrere Probleme. "Pick and Place"-Robotersysteme sind als solche stets ausgelegt, monotone Anwendungen mit einer relativ hohen Geschwindigkeit und einer hohen Präzision durchzuführen. Dies bedingt jedoch, dass die Fördermittel einer solchen Fließbearbeitungsvorrichtung hinsichtlich des Materialflusses exakt getaktet sein müssen, was selbstredend einen hohen Investitionsaufwand hinsichtlich Genauigkeit und Programmierung erfordert und dennoch eine gewisse Fehleranfälligkeit bietet.

Ein solches Robotersystem offenbart beispielsweise die US 2010/0198394 A1.

Auf Grund der exakt vorgegebenen Taktung können die Robotersysteme daher nur bei einem sich bewegenden Fließband "geteacht" werden, wodurch das Teach-In Verfahren als solches für das Robotersystem insgesamt komplexer wird und dadurch die Rüstkosten steigen. Im Betrieb einer solchen Fließbearbeitungsvorrichtung kommt hinzu, dass zur Synchronisierung des sich bewegenden Fördermittels und der Bewegung des Robotersystems ein Abgleich, ein sogenanntes "Conveyor Tracking", bei dem ein Roboterarm dem Förderband folgen kann, notwendig wird, wofür zusätzliche Steuermittel, Sensoren und zusätzlich zum Teach-In des Robotersystems eine entsprechende Steuerungsprogrammierung des Gesamtsystems notwendig werden.

Bei passiven Fließbearbeitungsvorrichtungen, bspw. bei auf entsprechenden Schrägen angeordneten Rollen, über die sich die Gegenstände eigenständig fortbewegen können, muss der passive Materialfluss stets von außen, bspw. von einem Menschen oder einer zusätzlichen technischen Vorrichtung angestoßen werden. Dies erschwert die Taktung und damit Synchronisierung mit der Bewegung des Robotersystems.

Die aus dem Stand der Technik bekannten "Pick and Place"-Robotersysteme dienen ausschließlich der Entnahme von Gegenständen bzw. Bestückung von Maschinen, Behältnissen oder Verpackungen mit diesen Gegenständen. Sie bedürfen daher einer genauen Parametrierung der Positionen der Gegenstände, Maschinen, Verpackungen usw.. Dies bedingt auch, dass sich die auf der zugehörigen Prozesslinie fortbewegenden Gegenstände, Behälter, Trägervorrichtungen oder dergleichen stets genau in den richtigen Relativpositionen zu dem Robotersystem befinden müssen. Das "Pick and Place"-Verfahren erweist sich daher als sehr fehleranfällig bei unvorhergesehenen Positionsabweichungen.

Grundsätzlich bedarf es zur genauen Bestimmung der Positionen der sich fortbewegenden Gegenstände einerseits und für eine genaue Zuordnung zu dem Roboter bzw. seinem Effektor, sowohl in Bezug auf stationäre Zustände als auch auf die von diesen durchzuführenden Bewegungen, andererseits einer Vielzahl von Sensoren, einhergehend mit einer entsprechenden, teilweise aufwändigen Auswertungselektronik. Nur mittels Sensoren lassen sich etwaige Positionsabweichungen der Gegenstände erkennen, mit denen der Roboter, in welcher Form auch immer, interagieren soll, ohne dass sich hierdurch Fehler eindeutig ausschließen lassen. Umgekehrt erfordern Sensoren, die die Bewegung und ggfs. auch die Art der zu bearbeitenden Gegenstände detektieren, dass diese Gegenstände streng kongruent, vorzugsweise linear, entlang der vorgegebenen Bahnen bzw. Prozesslinien einer entsprechenden Fließbearbeitungsvorrichtung bzw. eines zumindest einen Roboter aufweisenden Bearbeitungssystem geführt werden. Im Gegenzug erfordert dies eine entsprechend hochgenaue Ausgestaltung der Bearbeitungsvorrichtungen, Förderbänder und dergleichen für die Gegenstände bzw. auch der Behälter oder Trägervorrichtungen für diese Gegenstände. Die innerhalb eines solchen Gesamtsystems sich im Rahmen der Fortbewegung einerseits und der durchzuführenden Bearbeitungsschritte andererseits einstellenden unterschiedlichen Positionen und Positionsfolgen der Gegenstände oder der Trägervorrichtungen können nur durch positionsgesteuerte oder positionsgeregelte Robotersysteme angefahren werden. Selbstredend erhöht dies im Zusammenhang mit der Verteilung der zum Einsatz kommenden Sensoren den Programmieraufwand erheblich. Schon gar nicht lassen sich Robotersysteme in einem solchen Umfeld auf einfache Art und Weise teachen.

Darüber hinaus sind die aus dem Stand der Technik bekannten Robotersysteme, die ausgelegt sind, Gegenstände im Bereich eines hierfür vorgesehenen Arbeitsraums zu bearbeiten, wie beispielsweise Montageroboter, auf Grund ihrer Kinematik, ihren Abmessungen oder ihrer Gestaltung sowie den zum Einsatz kommenden Effektoren nicht in der Lage, diese Gegenstände gleichzeitig zwischen unterschiedlichen Positionen zu transportieren. Dies liegt in der Regel auch daran, dass der Arbeitsraum von der Prozesslinie, entlang der sich die zu bearbeitenden Gegenstände eigenständig oder mittels angetriebenen Fördermitteln fortbewegen, funktional und räumlich entkoppelt ist. Der nominale Arbeitsraum befindet sich dabei oftmals in unmittelbarer Nähe einer Fertigungs- oder Sortiermaschine.

Robotersysteme, die ausgelegt sind, Gegenstände entlang einer Fertigungsstraße bzw. einer Prozesslinie aktiv zu bewegen, sind beispielsweise aus der EP 2 492 055 A1 und der DE 10 2005 051 094 A1 bekannt.

Um die Automation bei der Sortierung und/oder Fertigung von Produkten zu verbessern und damit die mit Kosteneinsparung einhergehenden Zykluszeiten zu verkürzen, ist es ein allgemeines Bestreben in der Fertigungstechnik, die Produkt- und Variantenvielfalt pro Fertigungsstraße zu erhöhen. In einer Prozesslinie sollen vorzugsweise mehrere unterschiedliche Gegenstände entlang bewegt werden, die je nachdem auch unterschiedlichen Bearbeitungsprozessen durch eine oder mehrere Bearbeitungsvorrichtungen unterzogen werden können. Dies bedingt jedoch eine gewisse Flexibilität und Wandlungsfähigkeit der daran beteiligten Vorrichtungen, insbesondere der bei solchen Fließbearbeitungsvorrichtungen zum Einsatz kommenden Robotersysteme, die für einen Transport oder für eine Bearbeitung der Gegenstände gedacht sind.

Darüber hinaus sind die aus dem Stand der Technik bekannten "Pick and Place"-Robotersysteme nicht für weitergehende Bearbeitungsschritte, wie beispielsweise die Kleinteilmontage, das Bestücken oder das Einlegen von Komponenten, die Materialhandhabung, das Messen oder Prüfen, oder dergleichen, konzipiert. Für hochautomatisierte Fertigungsstraßen kann es jedoch aus Gründen der Wirtschaftlichkeit gewünscht sein, mehrere von diesen Bearbeitungsschritten zu vereinen.

Ausgehend davon stellt sich die Erfindung die Aufgabe, ein Robotersystem und ein Verfahren zur Steuerung eines solchen Robotersystems zu schaffen, das im Bereich einer Prozesslinie positionierbar und dort flexibel einsetzbar ist derart, dass sich der jeweils zur Nutzung der Prozesslinie vorgesehene Einsatzzweck bzw. Bearbeitungsvorgang für Gegenstände unter weiterer Verbesserung der Automatisierung vereinfachen lässt. Darüber hinaus soll die Positionierung der Gegenstände an Bearbeitungssystemen zum Zweck für die vorgesehenen, an diesen durchzuführenden Bearbeitungsvorgänge weiter vereinfacht werden. Der Aufwand für die Planung und Konzeption der Pfade bzw. der Prozesslinien für die sich fortbewegenden Gegenstände soll in diesem Zusammenhang weiter minimiert, der Einsatz von ggfs. fehleranfälligen Sensoren soll dabei weitestgehend vermieden oder sogar gänzlich ausgeschlossen werden.

Gelöst werden diese Aufgaben mit einem Verfahren zur Steuerung eines Robotersystems nach Anspruch 1 und mit einem Robotersystem nach Anspruch 6.

Die Erfindung betrifft in einem ersten Aspekt ein Robotersystem aufweisend eine Prozesslinie,
zumindest einen einen Effektor aufweisenden Roboterarm,
einem dem Robotersystem zugeordneten und außerhalb der Prozesslinie angeordneten Arbeitsraum,
und eine Steuereinheit zur Steuerung der Bewegung des Roboterarms, wobei der Roboterarm im Bereich einer Prozesslinie positionierbar und orientierbar ist,
wobei entlang der Prozesslinie ein Gegenstand oder eine Trägervorrichtung, auf der der Gegenstand angeordnet ist, bewegbar ist,
wobei der Arbeitsraum zumindest zwei Führungsmittel aufweist, die derart konvergierend aufeinander verlaufen, dass ein zwischen den zwei Führungsmitteln geführter Gegenstand oder eine Trägervorrichtung automatisch in der richtigen Position zum Robotersystem für die Bearbeitung positioniert wird,
wobei das Robotersystem eine Nachgiebigkeitsregelung aufweist.

Unter Nachgiebigkeitsregelung im Sinne der vorliegenden Erfindung soll dabei eine Impedanzregelung, eine indirekte Kraftregelung, eine Kraftregelung oder eine Kombination dieser Regelungen verstanden werden.

In diesem Zusammenhang soll das nachgiebige Verhalten des Roboters gemäß der Erfindung dabei vorzugsweise so ausgelegt sein, dass die Führung des Gegenstands zu einer Konvergenz der Bewegung führt, wie nachfolgend noch erläutert wird.

Des Weiteren soll das nachgiebige Verhalten so ausgelegt sein, dass die zwischen dem Gegenstand und den Führungsmitteln bei der Führung durch den Roboter auftretenden Kräfte zu keiner Beschädigung des Gegenstands führen.

Demzufolge richtet sich die vorliegende Erfindung an Robotersysteme, die mittels eines Effektors aktiv mit einem Gegenstand interagieren. Hierbei ist im Rahmen der Erfindung zu verstehen, dass das Robotersystem auch dazu gedacht und ausgelegt sein kann, mit dem Gegenstand in eine aktive Wechselwirkung zu treten, die über ein reines Transportieren wie beispielsweise bei dem aus dem Stand der Technik bekannten "Pick and Place"-Robotersystemen, oder über einfache, in der Regel im Ablauf sich stets gleichartig wiederholende Montageschritte von Montagerobotern hinaus geht.

Auf Grund der Tatsache, dass der Roboterarm den Gegenstand in dem hierfür vorgesehenen Arbeitsraum nicht nur "bearbeitet", sondern diesen oder eine für den Gegenstand gedachte Trägervorrichtung auch mittels seines Effektors unter Zuhilfenahme des zumindest einen Führungsmittels aktiv und selbstständig in den Arbeitsraum hinein führt und dort entsprechend positioniert, bevor der Effektor des Roboterarms mit dem Gegenstand für den jeweils vorgesehenen Zweck in Wechselwirkung tritt, und/oder aus diesem Arbeitsraum nach Abschluss der Bearbeitung ggfs. wieder unter Zuhilfenahme des zumindest einen Führungsmittels aktiv und selbstständig herausführt, geht die Erfindung mit dem Vorteil einher, dass sich die hierfür vorgesehenen Bearbeitungsvorgänge wesentlich vereinfachen und beschleunigen lassen. Die Zykluszeiten lassen sie wesentlich verkürzen.

Die Erfindung richtet sich in diesem Zusammenhang, jedoch nicht ausschließlich, an Robotersysteme der Leichtbauweise. Derartige Robotersysteme weisen in jedem Gelenk des Roboterarms einen Drehmomentsensor und/oder Kraftsensoren auf. Diese Kraft-/Momentensensorik gestattet grundsätzlich eine programmierbare Nachgiebigkeit des Robotersystems, so dass sich einfachere, wartungsärmere und damit kostengünstigere Werkzeuge bzw. Effektoren verwenden lassen.

Bei der Nachgiebigkeitsregelung, auch als Impedanz- oder Steifigkeitsregelung bezeichnet, handelt es sich im Prinzip um eine indirekte Kraftregelung der Gelenke des Robotersystems, bei der sich dieses in Bezug auf die extern anliegenden bzw. angreifenden Drehmomente und Kräfte beispielsweise als ein lineares Feder-Masse-Dämpfer-System verhält. Mit anderen Worten, die gewünschte Kontaktkraft, die beispielsweise von einem Greifer auf einen Gegenstand ausgeübt werden soll, stellt sich im Fall eines vorhandenen Kontakts indirekt über ein "Sollverhalten" ein und wird nicht vorgegeben, wie dies bei der klassischen Kraftregelung der Fall wäre, bei der eine vom Robotersystem auszuübende Kontaktkraft bzw. ein auszuübendes Moment unter Berücksichtigung eines definierten Regelziels vorgegeben wird.

Gemäß der Erfindung ist das Robotersystem derart konzipiert, dass der Arbeitsraum im Bereich der Prozesslinie vorgesehen ist und die Steuereinheit und der Roboterarm so ausgebildet sind, dass der Roboterarm mittels des Effektors den Gegenstand oder die Trägervorrichtung entlang der Prozesslinie zwischen zwei beabstandeten Führungsmitteln führen kann. Die Prozesslinie, beispielweise ein passives Förderband, wird hierbei vorzugsweise in unmittelbarer Nähe zu dem Robotersystem entlang geführt. Ein solches "passives" Förderband besteht im Prinzip nur aus einer ebenen Bahn, deren Verlauf durch von zwei Führungsmitteln in der Form von diese Bahn seitlich begrenzenden Führungsflächen oder -wänden festgelegt wird. Zwischen diesen, quasi als Banden wirkenden Führungswänden werden die Gegenstände bzw. die Trägervorrichtungen durch den Roboterarm entlang geführt. Der Roboter mit integrierter Nachgiebigkeit bringt dabei im Wesentlichen nur die für die Fortbewegung der Gegenstände erforderliche Kraft, entweder Zug- oder Druckkraft, auf, während die Gegenstände durch die Führungsmittel geführt werden und der Roboter mit seinen mehreren Achsen der durch die Führungsmittel auf die Gegenstände induzierten Bewegungsrichtung in nachgiebiger Weise folgt, wobei zwischen den Führungsflächen und den Gegenständen bzw. den Trägervorrichtungen ein entsprechendes Spiel vorgesehen sein kann. Auf diese Art und Weise ist es gemäß der Erfindung möglich, dass der Gegenstand bzw. die Trägervorrichtung, angetrieben von dem Roboter, neben einer im Wesentlichen linearen Prozesslinie auch einer beliebig gekrümmten Prozesslinie folgen kann.

Vorzugsweise werden die Führungsflächen so ausgebildet, dass sie kleine Reibkoeffizienten aufweisen. Dies wäre für die Führung der Gegenstände grundsätzlich von Vorteil, ist jedoch nicht zwingend erforderlich, da die Reibkoeffizienten und damit die Reibpaarungen zwischen den Führungsflächen und den sich daran entlang bewegenden Gegenständen bei der Ausgestaltung der zu Grunde zu legenden Nachgiebigkeitsregelung des Robotersystems in entsprechender Weise berücksichtigt werden.

Des Weiteren ist gemäß der Erfindung das Robotersystem derart konzipiert, dass der Arbeitsraum außerhalb der Prozesslinie vorgesehen ist und die Steuereinheit und der Roboterarm so ausgebildet sind, dass der Roboterarm mittels des Effektors den Gegenstand oder die Trägervorrichtung aus der Prozesslinie in den Arbeitsraum zwischen zwei zueinander konvergierenden Führungsmitteln und/oder aus diesen Führungsmitteln heraus und damit aus dem Arbeitsraum zurück auf die Prozesslinie führen kann. Der Roboterarm kann dabei den Gegenstand oder die Trägervorrichtung aus der Prozesslinie entnehmen und dem Arbeitsraum zu weiteren Bearbeitungsschritten, die von dem Roboterarm bzw. von einem an seinem Ende befindlichen Effektor durchgeführt werden, zuführen. Nach Beendigung der vorgesehenen Arbeitsschritte führt der Roboterarm den Gegenstand oder die Trägervorrichtung wieder zurück auf die Prozesslinie, bei der es sich beispielsweise um ein aktives Förderband handeln kann, die dann den bearbeiteten Gegenstand automatisch weiter fördert.

Die konvergierenden Führungsmittel können in der Form von zwei trichterartig auf eine finale Bearbeitungsposition für den Gegenstand zulaufende Führungsflächen ausgebildet sein. Der Roboter positioniert quasi den Gegenstand zwischen den beiden Führungsflächen und zieht oder schiebt diesen in Richtung auf die Endposition, wobei die Führungsflächen den Gegenstand dabei immer weiter einfassen und letztendlich zentrieren. Dies ist gemäß der Erfindung nur mit einem entsprechend nachgiebigen Verhalten möglich, so dass keine allzu großen Kontaktkräfte zwischen Gegenstand und Führung entstehen.

Besonders bevorzugt ist es dabei gemäß der Erfindung vorgesehen, dass der Roboterarm so konzipiert ist, dass er den Gegenstand oder die Trägervorrichtung nicht wie beispielsweise ein "Pick and Place"-Roboterarm zu Entnahme- bzw. Bestückungszwecken zwischen den verschiedenen Positionen anhebt oder ablegt, sondern den Gegenstand oder die Trägervorrichtung auf einer Ebene bzw. Oberfläche, entweder der Ebene/Oberfläche der Prozesslinie und/oder der Ebene/Oberfläche des Arbeitsraums entlang zieht oder über diese Ebene/Oberfläche schiebt. Dabei müssen die jeweiligen Ebenen nicht zwangsläufig eine gemeinsame Ebene bilden, sondern können bis zu einem gewissen Maß voneinander abweichen. Dies ist möglich, da das Robotersystem gemäß der Erfindung mit seiner immanenten programmierten Nachgiebigkeit und/oder in Kombination mit einer entsprechenden Kraftregelung das Abfahren von unregelmäßigen Oberflächen gestattet.

Unabhängig davon, welche Art von Effektor der Roboterarm an seinem Ende trägt, mit dem dieser mit dem Gegenstand interagiert bzw. diesen bearbeitet, kann gemäß der Erfindung das Steuersystem und der Roboterarm so ausgelegt sein, dass der Roboterarm, vorzugsweise mit dem Effektor, einfach an dem Gegenstand oder der Trägervorrichtung, beispielsweise seitlich angreift, um den Gegenstand oder die Trägervorrichtung weiter zu schieben, indem eine leichte Schubkraft aufgebracht wird.

Alternativ sind die Steuereinheit und der Roboterarm so ausgebildet, dass der Roboterarm mittels des Effektors auf den Gegenstand oder auf die Trägervorrichtung eine Zug- oder Schubkraft aufbringen kann.

In einer besonderen Ausführungsform weist der Roboterarm als Effektor einen Greifer auf, der auch dazu gedacht ist, mit dem Gegenstand in Wechselwirkung zu treten, beispielsweise zum Bestücken des Gegenstands mit weiteren Komponenten, wobei der Greifer darüber hinaus dazu dient und ausgelegt ist, den Gegenstand oder die Trägervorrichtung aktiv zu greifen bzw. einzuholen und dementsprechend entlang der Prozesslinie in den Arbeitsraum zu ziehen, indem eine entsprechende leichte Zugkraft aufgebracht wird.

In diesem Zusammenhang ist es gemäß der Erfindung auch möglich, dass die Führungsmittel aus vier zulaufenden Wänden gebildet werden, die eine Art Trichter bilden, in den der Roboter den Gegenstand von oben einsetzt, wobei die Führung auf die finale Position für den Gegenstand durch die Trichterwände erfolgt. Auf diese Art und Weise lassen sich Bestückungsvorgänge, z. Bsp. das Einlegen eines Gegenstands in einer hierfür vorgesehenen Fassung oder Aufnahme, programmierungstechnisch wesentlich vereinfachen.

Bei der Verwendung von Trägervorrichtungen können diese für den Greifer entsprechend ausgestaltete Angriffselemente aufweisen, wie beispielsweise Griffe, Ösen, Vorsprünge oder dergleichen.

Der an dem Roboterarm angeordnete Effektor kann derart ausgestaltet sein, dass dieser mit dem Gegenstand berührungslos zusammenwirkt, wie beispielsweise eine Kamera, die zu Prüfzwecken über den Gegenstand bewegt wird.

Es kann sich hierbei jedoch auch um einen Effektor handeln, der mit dem Gegenstand in Kontakt tritt, beispielsweise einem Messstift oder einem Greifer, der Komponenten in den Gegenstand einsetzen soll.

Denkbar ist auch ein Effektor, der als Werkzeug ausgestaltet ist und den Gegenstand körperlich verändern kann, beispielsweise ein Lötkolben oder ein Werkzeug, das der Befestigung von Komponenten dient.

Unabhängig von der Ausgestaltung des Effektors bzw. dem vorgesehenen Einsatzzweck des Effektors kann dieser gemäß der Erfindung stets auch dazu dienen, den Gegenstand bzw. seine Trägervorrichtung aktiv zwischen definierten Positionen im Bereich der Prozesslinie zu führen.

Ein wesentlicher Vorteil des Robotersystems gemäß der Erfindung liegt folglich darin, dass er die Taktung des Bearbeitungsprozesses selbst vorgibt. Damit entfällt die Notwendigkeit für ein stets automatisiertes Förderband und für ein Tracking, d.h. einer Bewegungssynchronisierung zwischen Förderband und Robotersystem.

Bei einem passiven Fördersystem kann das Robotersystem gemäß der Erfindung die Gegenstände selbsttätig aus der Prozesslinie entnehmen, nach der Bearbeitung diese auf die Prozesslinie zurückführen und ggfs. anstoßen oder anschieben, so dass sich diese dann von selbst wieder entlang der Prozesslinie fortbewegen.

Die durch die Erfindung realisierte Möglichkeit, dass ein Robotersystem mit einer Nachgiebigkeit einen Gegenstand in Wechselwirkung mit zumindest einem Führungsmittel führen kann, gestattet es, Bearbeitungssysteme zu bilden, bei denen ein entsprechender Roboter einfach im Bereich eines Tisches oder einer Werkbank positioniert wird und die Führungsmittel entsprechend auf der Oberfläche des Tisches stationär befestigt werden. So lassen sich Bearbeitungssysteme in den unterschiedlichsten Konfigurationen für die jeweils vorgesehenen Einsatzzwecke herstellen, die sich insbesondere auch für Mensch-Roboter-Kollaborations (MRK)-Arbeitsplätze eignen.

Die Erfindung betrifft darüber hinaus in einem zweiten Aspekt ein Verfahren zur Steuerung eines Robotersystems, das Robotersystem aufweisend
eine Prozesslinie,
zumindest einen einen Effektor aufweisenden Roboterarm, einen dem Robotersystem zugeordneten und außerhalb der Prozesslinie zugeordneten Arbeitsraum und eine Steuereinheit zur Steuerung der Bewegung des Roboterarms, wobei der Roboterarm im Bereich einer Prozesslinie positionierbar und orientierbar ist,
wobei entlang der Prozesslinie ein Gegenstand oder eine Trägervorrichtung, auf der der Gegenstand angeordnet ist, bewegbar ist,
wobei der Arbeitsraum zumindest zwei Führungsmittel aufweist, die derart konvergierend aufeinander verlaufen, dass ein zwischen den zwei Führungsmitteln geführter Gegenstand oder eine Trägervorrichtung automatisch in der richtigen Position zum Robotersystem für die Bearbeitung positioniert wird,
und wobei das Robotersystem eine Nachgiebigkeitsregelung aufweist,
aufweisend die Schritte:
   - nachgiebiges Führen des Gegenstands oder der Trägervorrichtung mittels des Roboterarms zwischen den zwei zueinander konvergierenden Führungsmitteln in den Arbeitsraum derart, dass der Gegenstand oder die Trägervorrichtung automatisch in der richtigen Position zum Robotersystem für die Bearbeitung positioniert wird;
   - Bearbeiten des Gegenstands mittels des Effektors; und
   - nach Beendigung der Bearbeitung des Gegenstands, Führen des Gegenstands oder der Trägervorrichtung mittels des Roboterarms aus den Führungsmitteln und dem Arbeitsraum heraus und zurück auf die Prozesslinie.

Sind die Führungsmittel im Bereich der Prozesslinie vorgesehen und zueinander beabstandet, beinhaltet der Schritt des Führens, dass der Roboterarm den Gegenstand oder die Trägervorrichtung zwischen den Führungsmitteln und damit entlang der Prozesslinie zieht oder schiebt.

Befinden sich die Führungsmittel abseits der Prozesslinie, beinhaltet der Schritt des Führens, dass der Roboterarm den Gegenstand oder die Trägervorrichtung aus der Prozesslinie zwischen zwei zueinander konvergierenden Führungsmitteln und/oder aus diesen Führungsmitteln auf die Prozesslinie zurück führt.

In einer Ausführungsform des Verfahrens gemäß der Erfindung umfasst der Schritt des Führens:
- verbindungsloses Berühren des Gegenstands oder der Trägervorrichtung mittels des Effektors; und
- Aufbringen einer Zug- oder Schubkraft oder Aufbringen eines entsprechenden Moments auf den Gegenstand oder auf die Trägervorrichtung mittels des Effektors.

In einer weiteren Ausführungsform des Verfahrens gemäß der Erfindung umfasst der Schritt des Führens:
- verliersicheres Greifen des Gegenstands oder der Trägervorrichtung mittels des Effektors; und
- Aufbringen einer Zug- oder Schubkraft auf den Gegenstand oder auf die Trägervorrichtung mittels des Effektors, oder
- Anheben des Gegenstands oder der Trägervorrichtung mittels des Effektors, Überführen in eine Arbeitsposition und Absetzen des Gegenstands oder der Trägervorrichtung in dieser Arbeitsposition.

Mit anderen Worten betrifft das Verfahren gemäß der Erfindung, bei dem ein Robotersystem gemäß der Erfindung mit einer programmierten Nachgiebigkeit, ggfs. in Kombination mit einer definierten Kraftregelung, zum Einsatz kommt, allgemein die Schritte, dass das im Bereich einer Fertigungslinie stehende Robotersystem das zu bearbeitende Werkstück, wobei Bearbeiten auch im Sinne eines berührungslosen Messens oder dergleichen verstanden werden kann, aus einer für den Roboterarm des Robotersystems erreichbaren Position, die sich außerhalb des nominalen Arbeitsraums befindet, an eine definierte Position innerhalb seines Arbeitsraums in Wechselwirkung mit den dort jeweils vorgesehenen Führungsmitteln schiebt oder zieht, wobei sich der Arbeitsraum unmittelbar auf der Fertigungslinie oder daneben befinden kann. Danach werden von dem Robotersystem die vorgesehenen Bearbeitungsschritte an dem Gegenstand durchgeführt. Nach Beendigung derselben, ggfs. wieder unter Zuhilfenahme der Führungsmittel, schiebt der Roboterarm ggfs. mittels seines Effektors das Werkstück wieder zurück auf die Prozesslinie oder auf dieser in der vorgesehenen Fertigungsrichtung ggfs. zur nächsten Fertigungsstation weiter.

Ein besonderer Vorteil des erfindungsgemäßen Verfahrens liegt dabei darin, dass die Steuereinheit und der Roboterarm darüber hinaus so ausgebildet sein können, dass eine Taktung beim Führen des Gegenstands oder der Trägervorrichtung ausschließlich durch das Robotersystem selbst vorgegeben wird.

Die durch das Robotersystem vorgegebene Taktung gestattet grundsätzlich die Verkürzung der Zykluszeiten, da die Fortbewegung der Gegenstände auf der Prozesslinie von den Bearbeitungsschritten, die vom Robotersystem durchgeführt werden, entkoppelt ist. Die Programmierung des Gesamtsystems und auch das Teach-In des Robotersystems werden wesentlich vereinfacht.

Ein weiterer wesentlicher Vorteil liegt auch darin, dass innerhalb ein und derselben Prozess- bzw. Fertigungslinie mehrere unterschiedliche Gegenstände bearbeitet werden können, die sich in einer Zufallsreihenfolge entlang bewegen. Das Robotersystem kann darüber hinaus so ausgelegt sein, dass dieses dementsprechend je nach Gegenstand an diesem verschiedenen Aktionen durchführen kann, wobei das Robotersystem in der Lage ist, die Gegenstände voneinander zu unterscheiden, bspw. mittels einer entsprechenden externen Sensorik in Echtzeit oder Verlaufsprogrammierung.

Um die Bewegungsbahnen beim Führen der Gegenstände bzw. der Trägervorrichtungen definiert festzulegen, wird die jeweilige Ausgangsposition des zu bearbeitenden Werkstücks bzw. Trägers sowie die diesbezügliche Anfahrtstrajektorie unter Berücksichtigung der hierfür jeweils vorgesehenen Führungsmittel zu dem nominalen Arbeitsraum zusammen mit Greif- oder Kontaktpositionen durch einen Benutzer am Robotersystem gespeichert, wobei dies vorzugsweise über ein Teach-In Verfahren erfolgt. Des Weiteren werden die Endposition des Werkstücks im Bereich des Arbeitsraums und die entsprechende Rückfahrtstrajektorie am Robotersystem eingestellt.

So wird es auf einfache Art und Weise ermöglicht, dass das Robotersystem die Gegenstände bzw. Werkstücke oder diese tragende Trägervorrichtungen eigenständig quasi zu sich heran holt, um dann einen zuvor programmierten Bearbeitungsschritt durchzuführen.

Da die Führungsmittel in Wechselwirkung mit der Bewegung des Roboters bzw. seiner einzelnen Achsen den Gegenstand tatsächlich führen, müssen die hierfür vom Robotersystem zu durchfahrenden Bewegungsbahnen nicht hochgenau, d.h. exakt positionsgesteuert bzw. -geregelt festgelegt oder mittels einer aufwändigen externen Sensorik, wie bspw. Bildverarbeitungs- oder Trackingsysteme überwacht und sichergestellt werden; vielmehr reicht es aus, dass diese Bewegungsbahnen unter Berücksichtigung gewisser Toleranzen und Abweichungen gespeichert bzw. geteacht werden. Der Programmieraufwand vereinfacht sich hierdurch erheblich.

Im Falle eines passiven Fördersystems, bei der die Gegenstände entlang der Erstreckung der Prozesslinie bewegt werden sollen, wird durch das Robotersystem immer der jeweils nächste Gegenstand bzw. die nächste Trägervorrichtung durch den Roboterarm herangezogen oder geschoben und der bisherige, abschließend bearbeitete Gegenstand bzw. die entsprechende Trägervorrichtung dadurch automatisch zur nächsten Station auf der Prozesslinie befördert. Alternativ kann das Robotersystem das bearbeitete Werkstück selbst zur nächsten Station führen, wobei die diesbezügliche Trajektorie dann ebenfalls von einem Benutzer am Robotersystem gespeichert werden muss. In beiden Fällen erfolgt die letztendliche Führung des Gegenstands immer durch die im Bereich der Prozesslinie vorgesehenen Führungsmittel.

Das Robotersystem gemäß der Erfindung kann Teil eines Bearbeitungssystems mit einer Prozesslinie sein, entlang der Gegenstände oder Trägervorrichtungen für diese Gegenstände bewegbar sind, wobei ein Roboter, der im Bereich dieser Prozesslinie angeordnet ist, wobei der Roboter eine oder mehrere Achsen aufweist und mit einer Nachgiebigkeitsregelung ausgebildet ist, und wobei zumindest ein Führungsmittel vorgesehen ist, das im Bereich der Prozesslinie angeordnet und ausgebildet ist, den Gegenstand oder die Trägervorrichtung durch eine Bewegung des Roboters in eine für eine weitere Bearbeitung des Gegenstands vorgesehene Bearbeitungsposition zu überführen.

Wie erwähnt kann hierbei das Führungsmittel aus zueinander beabstandeten Führungsflächen für den Gegenstand oder die Trägervorrichtungen bestehen, wobei die Führungsflächen entlang einer Prozesslinie angeordnet sind, die linear oder nicht-linear ausgebildet ist.

Da die Fortbewegung, sozusagen der Antrieb der Gegenstände entlang der Prozesslinie mittels einer nachgiebig konzipierten Bewegung des Roboters erfolgt, die eigentliche Führung jedoch über die Führungsmittel selbst, ist es möglich dass die Führungsflächen mit einem gewissen Spiel zu dem entlang der Prozesslinie geführten Gegenstand oder der Trägervorrichtung angeordnet sind. Hierdurch lassen sich beispielsweise Toleranzabweichungen in den Abmessungen der Gegenstände auffangen. Die Bereitstellung eines definierten Spiels gestattet es auch, dass die Programmierung der vom Roboter zu durchlaufenden Bewegungen mit gewissen Abweichungen, also mit einer gewissen Unschärfe, möglich und daher einfacher ist.

Unter Prozesslinie kann dabei eine Fertigungslinie bzw. - strasse jeglicher Ausgestaltung verstanden werden, auf welcher zu bearbeitende Gegenstände kontinuierlich oder diskontinuierlich, ggfs. zwischen mehreren Arbeitsstationen entlang bewegt werden können. Denkbar ist jedoch auch die Oberfläche einer einfachen Werkbank, auf der entsprechende Führungsmittel stationär angebracht werden, wobei der Roboter einfach im Bereich des Tisches positioniert wird. Hierfür kann prinzipiell auch ein mobiler Roboter eingesetzt werden, der eigentlich für sich genommen nicht sehr genau im Verhältnis zum Tisch positioniert werden kann, jedoch durch die erfindungsgemäße Kombination einer Nachgiebigkeitsregelung mit Führungsmitteln kann eine solche ungenaue Positionierung eines mobilen Roboters ohne Weiteres kompensiert werden.

Auch kann es sich hierbei um ein passives Fördersystem handeln, bspw. mehrere Rollen auf einer Schräge, so dass sich die Gegenstände durch ihr Eigengewicht fortbewegen, wobei im Bereich oder in der Nähe des Arbeitsraums des Robotersystems zumindest ein Anschlagmittel für den Gegenstand oder für die Trägervorrichtung vorgesehen sein kann. Die Gegenstände laufen gegen das Anschlagmittel auf und der Roboterarm entnimmt die zu bearbeitenden Gegenstände unmittelbar von dort.

In einer weiteren Ausführungsform des Bearbeitungssystems kann im Bereich oder außerhalb, vorzugsweise unmittelbar neben der Prozesslinie auch zumindest ein Führungsmittel für den Gegenstand oder für die Trägervorrichtung vorgesehen sein.

Insbesondere bei einer Ausführungsform, bei der sich der nominale Arbeitsraum außerhalb der Prozesslinie befindet, können zwei Führungsmittel vorgesehen sein, die zueinander konvergieren. Der Roboterarm zieht die zu bearbeitenden Gegenstände von der Prozesslinie in den Arbeitsraum, der zwischen den beiden Führungsmitteln angeordnet ist. Durch die konvergierende Ausgestaltung der Führungsmittel, die darüber hinaus auch aus einem nachgiebigen Material hergestellt sein können, um Toleranzabweichungen zu begegnen, wird der Gegenstand bzw. die Trägervorrichtung automatisch in der richtigen Relativposition bzw. -orientierung zum Robotersystem positioniert. Die Anforderungen an die Programmierung des Robotersystems werden dadurch noch weiter vereinfacht.

Vorzugsweise befinden sich bei einem Bearbeitungssystem der Arbeitsraum und die Prozesslinie im Wesentlichen auf einer Ebene. Es ist jedoch auch möglich, dass sich diese in unterschiedlichen Ebenen befinden und das Führungsmittel quer oder geneigt zu der Ebene der Prozesslinie ausgerichtet ist. Die Führungsmittel werden dabei durch aufeinander zu konvergierende Flächen gebildet, zwischen denen der Gegenstand durch den Roboter im Wesentlichen von oben eingesetzt wird und sich nach unten in die gewünschte finale Position zentrieren lässt.

Es wird deutlich, dass die wesentlichen Vorteile des erfindungsgemäßen Robotersystems einerseits und eines ein solches Robotersystem implementierenden Bearbeitungssystems andererseits darin liegen, dass keine spezielle, insbesondere keine in räumlicher Hinsicht hochpräzise Ausgestaltung des Arbeitsraums und der Prozesslinie erforderlich ist.

Die Fließbearbeitungsvorrichtungen bzw. Prozesslinien lassen sich unabhängig von den vom Robotersystem durchzuführenden Bearbeitungsschritten vollkommen passiv ausgestalten, wodurch sich die Investitionskosten wesentlich verringern, da weder aktivierte Zuführ- und Abführeinrichtungen noch eine entsprechende Steuerung der Fortbewegung vorgesehen werden müssen.

Auf Grund der Nachgiebigkeit, ggfs. in Kombination mit einer programmierbaren Kraftregelung, des Robotersystems gemäß der Erfindung arbeitet dieses in Verbindung mit einer Prozesslinie quasi autark, indem es die Taktung der Bearbeitungsschritte und die Geschwindigkeit der Fortbewegung selbst vorgibt.

Ein wesentlicher Vorteil in der Verwendung eines Robotersystems, das eine Nachgiebigkeitsregelung aufweist, liegt jedoch vor allem darin, dass die Führung von zu bearbeitenden Gegenständen sowohl entlang der Prozesslinie als auch relativ zu einem Arbeitsraum ausschließlich in Wechselwirkung mit hierfür entsprechend ausgestalteten und an entsprechenden Stellen angeordneten Führungsmitteln erfolgen kann. Da hierdurch die Notwendigkeit für eine strenge Positionsregelung des Roboters entfällt, bedarf es auch keiner Sensoren, um die einzelnen Positionen der Gegenstände bzw. Trägervorrichtungen im Verlauf ihrer Bewegungen zu detektieren. Eine diesbezügliche Auswerteelektronik/-sensorik und Steuerung kann vollständig entfallen.

Weitere Vorteile und Merkmale der Erfindung ergeben sich aus der Beschreibung der anhand der beigefügten Figuren dargestellten Ausführungsbeispiele. Es zeigen:
- Fig. 1: exemplarisch eine perspektivische Ansicht eines Robotersystems an einer bekannten Fließbearbeitungsvorrichtung;
- Fig. 2: eine perspektivische Ansicht eines Bearbeitungssystems mit einem Robotersystem in einer ersten Ausführungsform gemäß der Erfindung;
- Figuren 2a,b,c: exemplarisch unterschiedliche Positionen eines Roboterarms des Robotersystems in dem Bearbeitungssystem aus Fig. 2;
- Fig. 3: eine perspektivische Ansicht eines Bearbeitungssystems mit einem Robotersystem in einer zweiten Ausführungsform gemäß der Erfindung;
- Figuren 3a,b: exemplarisch unterschiedliche Positionen eines Roboterarms des erfindungsgemäßen Robotersystems in dem Bearbeitungssystem aus Fig. 3;
- Fig. 4a: eine perspektivische Ansicht eines Bearbeitungssystems mit einem Robotersystem in einer dritten Ausführungsform gemäß der Erfindung;
- Fig. 4b: exemplarisch eine Ansicht von oben einer Prozesslinie aus Fig. 4a; und
- Fig. 5: eine perspektivische Ansicht eines Bearbeitungssystems mit einem Robotersystem in einer vierten Ausführungsform gemäß der Erfindung.

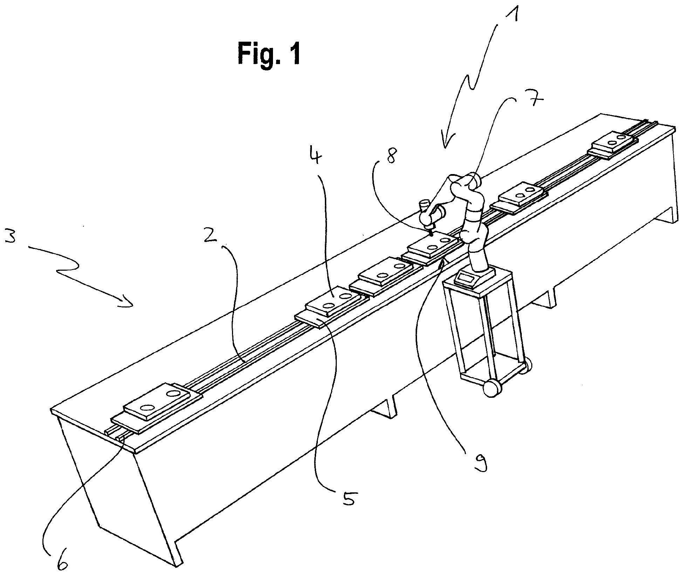

In der Fig. 1 ist exemplarisch eine Anordnung aus dem Stand der Technik gezeigt, bei der ein Robotersystem 1, vorzugsweise der Leichtbauweise, an einer Prozesslinie 2 einer Fließbearbeitungsvorrichtung 3 positioniert ist. Entlang der Prozesslinie 2 werden Werkstücke bzw. Gegenstände 4, die auf entsprechenden Trägervorrichtungen 5 angeordnet sind, über ein aktives Förderband 6 an dem Robotersystem 1 vorbei bewegt.

Das Robotersystem 1 weist einen mehrgliedrigen Roboterarm 7 auf, der an seinem Ende einen Effektor 8, bspw. einen Messstift, trägt, mit Hilfe von welchem der Roboterarm 7 im Bereich eines dem Roboterarm 7 zugeordneten Arbeitsraums 9, der sich unmittelbar vor dem Robotersystem 1 auf der Prozesslinie 2 befindet, interagiert. Mittels des Messstiftes 8 kann der Roboterarm 7 den Gegenstand 4 zu Prüfzwecken beispielsweise abtasten.

Bei dieser Anordnung wird der Gegenstand 4 selbstständig durch das aktiv angetriebene Förderband 6 an dem Robotersystem 1 vorbei bewegt. Da sich das Förderband 6 mit einer vorgegebenen Geschwindigkeit weiterbewegt, wird die Taktung der Arbeitsprozesse für das Robotersystem 1 letztendlich durch die Geschwindigkeit des Förderbands 6 vorgegeben. Dementsprechend müssen die Bewegungen des Roboterarms 7 auf die Geschwindigkeit der Förderbands 6 abgestimmt werden, wobei das Zeitfenster für die von dem Roboterarm 7 durchzuführenden Bearbeitungsschritte begrenzt bleibt.

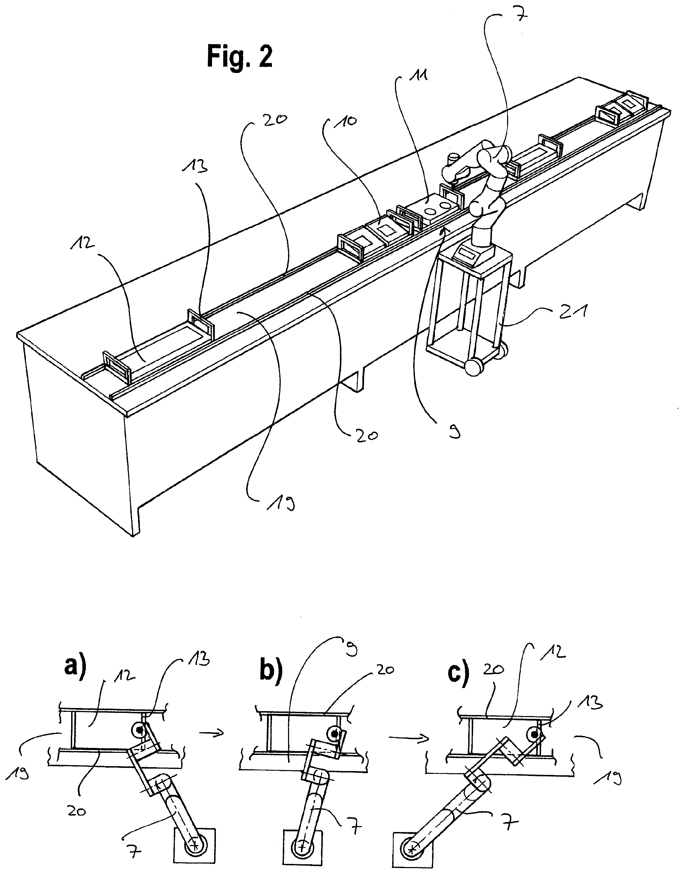

Fig. 2 zeigt demgegenüber ein Bearbeitungssystem in einer ersten Ausführungsform gemäß der Erfindung, bei welcher das Robotersystem 1 die Taktung selbst vorgeben kann.

Unterschiedliche Gegenstände 10, 11 sind auf entsprechenden Trägervorrichtungen 12 abgelegt, die seitlich einen Rahmen oder Griff 13 aufweisen.

Die Prozesslinie 19 wird durch zwei Führungsmittel in der Form von zueinander in einem gleichen Abstand angeordneten Führungsflächen 20 gebildet, zwischen denen die Trägervorrichtungen 12 entlang bewegbar sind. Die Führungsflächen 20 dienen sozusagen als Führungsschienen, zwischen denen die Trägervorrichtungen 12 entlang gezogen bzw. geschoben werden, indem der Roboterarm 7 an dem Griff 12 der Trägervorrichtung 12 angreift.

Die Figuren 2a bis c zeigen hierbei schematisch in Draufsicht unterschiedliche Positionszustände des Robotersystems 1. Vorzugsweise handelt es sich bei dem Robotersystem 1 gemäß der Erfindung um einen mobilen Roboter mit einem siebenachsigen Roboterarm 7.

In Fig. 2a ist gezeigt, wie der Roboterarm 7 mit seinem Effektor 8 auf der Prozesslinie 19 links von dem nominalen Arbeitsraum 9 an einem Griff 13 der Trägervorrichtung 12 angreift, um diese in den nominalen Arbeitsraum 9 zu ziehen.

Nach erfolgter Bearbeitung des auf der Trägervorrichtung 12 angeordneten, hier nicht dargestellten Gegenstands, greift der Effektor 8 wieder an dem Griff 13 der Trägervorrichtung 12 an und schiebt diese auf der Prozesslinie 2 weiter in der Darstellung nach rechts, wie die Figuren 2b und 2c andeuten. Danach kann sich der Roboterarm 7 wieder zurück nach links bewegen, um mit einer nächsten Trägervorrichtung 12 in Kontakt zu gelangen und diese wieder zu Bearbeitungszwecken an sich in den Bereich des nominalen Arbeitsraums 9 heran zu ziehen.

Dadurch, dass der Roboterarm 7 die Trägervorrichtung 12 entlang der Prozesslinie 2 einerseits selbsttätig zu sich in den nominalen Arbeitsraum 9, der im vorliegenden Fall unmittelbar vor dem Robotersystem 1 angeordnet ist, heran zieht und dann andererseits nach erfolgter Bearbeitung die Trägervorrichtung 12 selbsttätig aus dem nominalen Arbeitsraum 9 heraus weiterschiebt, wird die Taktung der vom Robotersystem 1 durchzuführenden Arbeitsschritte selbst vorgegeben bzw. bestimmt das Robotersystem 1 in Abhängigkeit der durchzuführenden Arbeitsschritte den Vorschub auf der Prozesslinie 19.

Durch die sich dadurch ergebende erhöhte Variabilität bei den Prozessschritten lassen sich daher mit ein und demselben Robotersystem 1 innerhalb eines und desselben Bearbeitungssystems aufeinanderfolgend unterschiedliche Gegenstände 10 und 11 individuell und ggfs. unterschiedlich bearbeiten und individuell entlang der Prozesslinie 19 transportieren.

Da gemäß der Erfindung der Roboter bzw. das Robotersystem 1 eine Nachgiebigkeitsregelung aufweist, muss beim Eingriff des Effektors 8 mit dem Griff 13 durch den Roboterarm 7 lediglich eine entlang der Prozesslinie 19 wirkende Zug- oder Schubkraft aufgebracht werden. Die im vorliegenden Fall lineare Führung der Trägervorrichtungen 12 erfolgt dabei ausschließlich durch die beiden Führungsflächen 20. Diese Führungsfunktion in Wechselwirkung mit der durch den Roboterarm 7 aufzubringenden Kraft gestattet es, dass es vollkommen genügt, dass der Effektor 8 an dem Griff 13 einfach seitlich zur Anlage kommt.

Auf Grund der Tatsache, dass mangels der Notwendigkeit einer Positionssteuerung und -regelung für das Robotersystem 1 dieses keine festgelegte, unveränderbare Position im Raum und im Verhältnis zur Prozesslinie 19 einnehmen muss, kann gemäß der Erfindung das Robotersystem 1 auf einfache Art und Weise über eine mobile Plattform 21 an einer vorgesehenen Position relativ zum nominalen Arbeitsraum 9 und relativ zu der Prozesslinie 19 positioniert werden. Die Position des Robotersystems 1 kann an veränderte Bearbeitungsprozesse daher ohne komplizierte Umrüstmaßnahmen angepasst werden. Des Weiteren ist es möglich, dass in einem solchen Bearbeitungssystem mehrere derartige Robotersysteme 1 nebeneinander eigenständig oder synergetisch an einer Prozesslinie 19 zusammenarbeiten, dies unter Umständen sogar unter Zwischenschaltung von einem oder mehreren Werkern. Hierdurch lassen sich beliebige Abläufe für ein Bearbeitungssystem konzipieren, bspw. gezielt Fertigungsstraßen mit MRK-Robotersystemen aufbauen. Der Variabilität in der Gestaltung von derartigen Bearbeitungssystemen gemäß der Erfindung sind quasi keine Grenzen gesetzt.

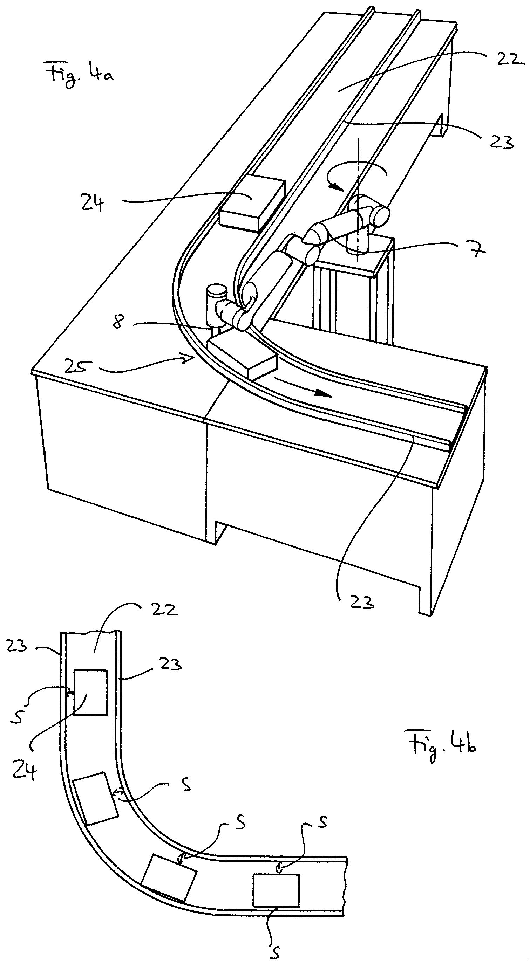

Während in der Fig. 2 ein Bearbeitungssystem mit einer ausschließlich linearen Prozesslinie 19 gezeigt ist, ist in der Fig. 4a ein Bearbeitungssystem in einer dritten Ausführungsform gemäß der Erfindung mit einer sich im Verlauf verändernden Prozesslinie 22 dargestellt. Diese Prozesslinie 22 wird ebenfalls durch zwei beabstandete Führungsschienen bzw. -flächen 23 gebildet, innerhalb derer Gegenstände 24 durch den Roboterarm 7 entlang geschoben werden können. Da der Roboterarm 7 mit seiner Nachgiebigkeitsregelung lediglich den Vorschub für die Gegenstände 24 bereitstellt, indem der Effektor 8 seitlich an diesen zur Anlage kommt, ist es möglich, dass in Wechselwirkung mit den Führungsflächen 23 die Gegenstände 24 um eine Kurve 25 der Prozesslinie 22 geführt werden können.

Um ein Blockieren zu verhindern, ist zwischen den Führungsflächen 23 und den Abmessungen der Gegenstände 24 ein gewisses Spiel S vorgesehen, wie die Fig. 4b zeigt. Das Robotersystem 1 ist folglich auf Grund seines Regelungsverhaltens in der Lage, die Gegenstände 24 mit einer gewissen Unschärfe quer zu der Fortbewegungsrichtung entlang der Prozesslinie 22 fortzubewegen.

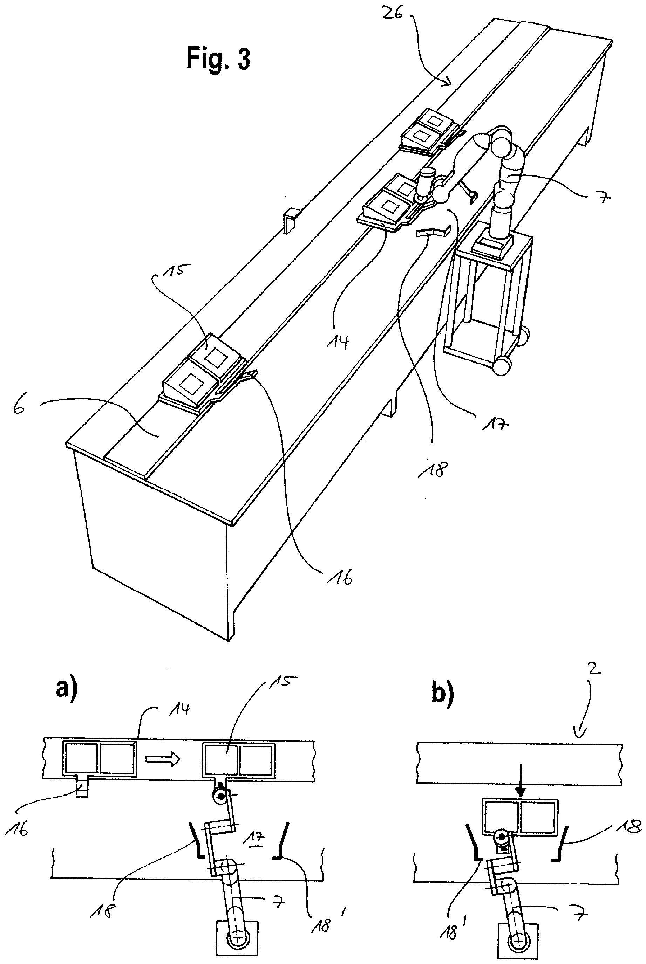

In der Fig. 3 ist ein weiteres Bearbeitungssystem in einer zweiten Ausführungsform der Erfindung gezeigt.

Entlang einer Prozesslinie 26, hier bspw. wieder ein aktives Förderband 6, bewegen sich Trägervorrichtungen 14, auf denen sich die zu bearbeitenden Gegenstände 15 befinden. Die Trägervorrichtungen 14 weisen vorderseitig ein Griffelement 16 auf.

Unmittelbar vor dem Robotersystem 1 befindet sich der diesem zugeordnete nominale Arbeitsraum 17. Dieser Arbeitsraum 17 wird durch zwei Führungsmittel 18 begrenzt, die konvergierend aufeinander zu laufen.

Wie in den Figuren 3a und b schematisch zu erkennen ist, holt sich der Roboterarm 7 des erfindungsgemäßen Robotersystems 1 die Trägervorrichtung 14 von dem Förderband 6 und zieht diese in den vor ihm liegenden Arbeitsraum 17, wobei durch die konvergierenden Führungsmittel 18 eine automatische Zentrierung der Trägervorrichtung 14 in eine finale Arbeitsposition erfolgt, indem die Trägervorrichtung 14 in die Anschläge 18' der Führungsmittel 18 einfasst, so dass der Roboterarm 7 dann die gewünschten Arbeitsschritte durchführen kann, ohne dass er hierfür die Trägervorrichtung 14 hochgenau positionieren muss, was im Vorfeld seine Parametrierung erleichtert.

Nach Beendigung der Bearbeitung der Gegenstände 15 kann der Roboterarm 7 die Trägervorrichtung 14 wieder zurück auf das Förderband 6 schieben, indem sein Effektor 8 einfach an dem Griffelement 16 angreift.

Die Nachgiebigkeitsregelung des gemäß der Erfindung zum Einsatz kommenden Roboters gestattet es auch, dass das Robotersystem 1 die Trägervorrichtungen 14 zwischen dem Förderband 6 und dem Arbeitsraum 17 hin und her bewegen kann, obwohl das Förderband 6 und der Arbeitsraum 17 nicht auf einer gemeinsamen Ebene liegen.

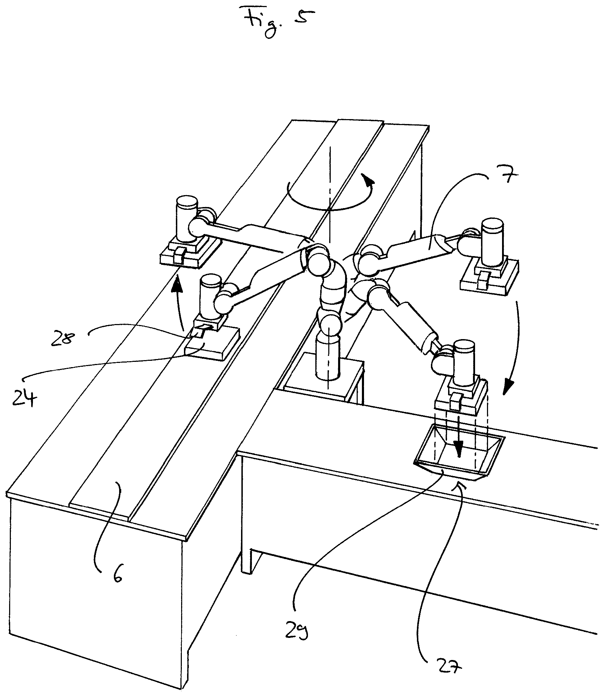

In der Fig. 5 ist schematisch ein Bearbeitungssystem in einer vierten Ausführungsform gemäß der Erfindung gezeigt. In dieser befindet sich ein nominaler Arbeitsraum 27 weiter abseits von einem Förderband 6, auf dem sich Gegenstände 24 entlang bewegen. Der Effektor des Robotersystems 1 ist als ein Greifmechanismus 28 ausgebildet, der die Gegenstände 24 greifen kann. Der Roboterarm 7 hebt die Gegenstände 24 an und überführt diese durch eine Drehbewegung, exemplarisch dargestellt durch mehrere Positionen des Roboterarms 7, zu dem Arbeitsraum 27. Der Arbeitsraum 27 weist ein Führungsmittel in der Form eines zulaufenden Trichters 29 auf, in den der Roboterarm 7 den Gegenstand 24 einführt. Durch die zulaufenden Wände des Trichters 29 wird der Gegenstand 24 dann automatisch in der abschließenden Arbeits- oder Montageposition zentriert, sobald der Gegenstand 24 vollständig von dem Roboterarm 7 abgesetzt wurde.

Die Führung entlang von vorgegebenen Führungsmitteln, unabhängig von deren Gestaltung, wird gemäß der Erfindung dadurch ermöglicht, dass dem Robotersystem gemäß der Erfindung eine Nachgiebigkeit in Bezug auf die Motorik innewohnt, die durch die Möglichkeit zum Beispiel einer Kraft-, Nachgiebigkeits- oder Impedanzregelung, oder auch durch einen hybriden Ansatz als Folge einer Kombination von solchen unterschiedlichen Regelungen, der Antriebseinheiten in den einzelnen Gelenken zwischen den Gliedern des Roboterarms eine weitere Unterstützung erfährt. Diese Regelung kann zahlreiche Formen annehmen. Die Wichtigsten sind eine Regelung in Gelenkkoordinaten, also eine koordinierte Achsregelung, oder eine aufgabenorientierte Regelung, die beispielsweise im kartesischen Raum definiert ist, und über geometrische Projektionen, wie beispielsweise durch die Jacobi-Matrix, Gelenksollmomente bzw. -sollkräfte übersetzt werden. Darüber hinaus könnten Erweiterungen wie die Multi-Prioritätsregelung genutzt werden.

In Wechselwirkung mit vorgegebenen Führungsmitteln im Bereich von Prozesslinien lässt sich so eine einfache Führung der Gegenstände durch den Roboter realisieren.

Das Robotersystem 1 gemäß der Erfindung eignet sich insbesondere auch in Umgebungen, bei denen gleichzeitig Menschen in die Arbeitsprozesse einer dieses Robotersystem 1 aufweisenden Fließbearbeitungsvorrichtung eingebunden sind, so dass solche Robotersysteme 1 für eine entsprechende Mensch-Roboter-Kollaboration ausgelegt sein können.

Es wird deutlich, dass durch die Tatsache, dass das Robotersystem 1 gemäß der Erfindung, das an sich, über reine "Pick and Place"-Arbeitsschritte sowie sich wiederholende Montageschritte hinausgehend, der aktiven Bearbeitung von Gegenständen dienen soll, selbstständig die Taktung der einzelnen Arbeitsschritte innerhalb einer Fließbearbeitungsvorrichtung vorgibt, grundsätzlich der Variabilität und Flexibilität keine Grenzen gesetzt sind, sowohl was die Art der zu bearbeitenden Gegenstände als auch was die Art und Weise der an diesen durchzuführenden Bearbeitungsschritte angeht.

Das Robotersystem 1 gemäß der Erfindung lässt sich für die jeweils vorgesehenen Zwecke individuell einsetzen und entsprechend programmieren und parametrieren, wobei der Aufwand der Programmierung geringer ausfällt, je nachgiebiger das Robotersystem 1 als solches ausgestaltet ist. Hierzu können insbesondere die vorhergehend erwähnte Nachgiebigkeitsregelung sowie die Kraftregelung in Bezug auf die einzelne Gelenke des Roboterarms und damit des erfindungsgemäßen Robotersystems 1 in Bezug auf sein Gesamtverhalten dienen.

## Patentansprüche

1. Verfahren zur Steuerung eines Robotersystems (1), das Robotersystem (1) aufweisend
eine Prozesslinie (2),
zumindest einen einen Effektor (8) aufweisenden Roboterarm (7),
einen dem Robotersystem (1) zugeordneten und außerhalb der Prozesslinie (2) zugeordneten Arbeitsraum (9,17,27) und eine Steuereinheit zur Steuerung der Bewegung des Roboterarms (7), wobei der Roboterarm (7) im Bereich einer Prozesslinie (2) positionierbar und orientierbar ist,
wobei entlang der Prozesslinie (2) ein Gegenstand (10,11,15,24) oder eine Trägervorrichtung (12,14), auf der der Gegenstand (10,11,15,24) angeordnet ist, bewegbar ist,
wobei der Arbeitsraum (9,17) zumindest zwei Führungsmittel (18,29) aufweist, die derart konvergierend aufeinander verlaufen, dass ein zwischen den zwei Führungsmitteln (18,29) geführter Gegenstand (10,11,15,24) oder eine Trägervorrichtung (12,14) automatisch in der richtigen Position zum Robotersystem (1) für die Bearbeitung positioniert wird,
und wobei das Robotersystem (1) eine Nachgiebigkeitsregelung aufweist,
aufweisend die Schritte:
- nachgiebiges Führen des Gegenstands (10,11,15,24) oder der Trägervorrichtung (12,14) mittels des Roboterarms (7) zwischen den zwei zueinander konvergierenden Führungsmitteln (18,29) in den Arbeitsraum (9,17) derart, dass der Gegenstand (10,11,15,24) oder die Trägervorrichtung (12,14) automatisch in der richtigen Position zum Robotersystem (1) für die Bearbeitung positioniert wird;
- Bearbeiten des Gegenstands (10,11,15,24) mittels des Effektors (8); und
- nach Beendigung der Bearbeitung des Gegenstands (10,11,15,24), Führen des Gegenstands (10,11,15,24) oder der Trägervorrichtung (12,14) mittels des Roboterarms (7) aus den Führungsmitteln (18;20;23;29) und dem Arbeitsraum (9,17,27) heraus und zurück auf die Prozesslinie (2).

2. Verfahren nach Anspruch 1, bei dem weitere Führungsmittel (20;23) im Bereich der Prozesslinie (19;22) vorgesehen und zueinander beabstandet sind, wobei der Roboterarm (7) den Gegenstand (10,11,24) oder die Trägervorrichtung (12) zwischen den Führungsmitteln (20;23) und damit entlang der Prozesslinie (2) führt.

3. Verfahren nach einem der Ansprüche 1 oder 2, bei dem der Schritt des Führens umfasst:
- verbindungsloses Berühren des Gegenstands (10,11,15,24) oder der Trägervorrichtung (12,14) mittels des Effektors (8); und
- Aufbringen einer Zug- oder Schubkraft auf den Gegenstand (10,11,15,24) oder auf die Trägervorrichtung (12,14) mittels des Effektors (8).

4. Verfahren nach einem der Ansprüche 1 oder 2, bei dem der Schritt des Führens umfasst:
- verliersicheres Greifen des Gegenstands (24) oder der Trägervorrichtung (12,14) mittels des Effektors (8); und
- Aufbringen einer Zug- oder Schubkraft auf den Gegenstand (24) oder auf die Trägervorrichtung (12,14) mittels des Effektors (8), oder
- Anheben des Gegenstands (24) oder der Trägervorrichtung (12,14) mittels des Effektors (8), Überführen in eine Arbeitsposition und Absetzen des Gegenstands (24) oder der Trägervorrichtung (12,14) in dieser Arbeitsposition.

5. Verfahren nach einem der Ansprüche 1 bis 4, bei dem die Steuereinheit und der Roboterarm (7) so ausgebildet sind, dass eine Taktung beim Führen des Gegenstands (10,11,15,24) oder der Trägervorrichtung (12,14) durch das Robotersystem (1) vorgegeben wird.

6. Robotersystem (1) aufweisend
eine Prozesslinie (2),
zumindest einen einen Effektor (8) aufweisenden Roboterarm (7),
einem dem Robotersystem (1) zugeordneten und außerhalb der Prozesslinie (2) angeordneten Arbeitsraum (9,17,27),
und eine Steuereinheit zur Steuerung der Bewegung des Roboterarms (7), wobei der Roboterarm (7) im Bereich einer Prozesslinie (2) positionierbar und orientierbar ist,
wobei entlang der Prozesslinie (2) ein Gegenstand (10,11,15,24) oder eine Trägervorrichtung (12,14), auf der der Gegenstand (10,11,15,24) angeordnet ist, bewegbar ist,
wobei der Arbeitsraum (9,17) zumindest zwei Führungsmittel (18,29) aufweist, die derart konvergierend aufeinander verlaufen, dass ein zwischen den zwei Führungsmitteln (18,29) geführter Gegenstand (10,11,15,24) oder eine Trägervorrichtung (12,14) automatisch in der richtigen Position zum Robotersystem (1) für die Bearbeitung positioniert wird,
wobei das Robotersystem (1) eine Nachgiebigkeitsregelung aufweist,
und wobei das Robotersystem (1) zum Austragen eines Verfahrens nach einem der Ansprüche 1 bis 5 ausgebildet ist.

7. Robotersystem nach Anspruch 6, bei dem weitere Führungsmittel (20,23) im Bereich der Prozesslinie (19,22) vorgesehen und zueinander beabstandet sind, so dass der Roboterarm (7) den Gegenstand (10,11,24) oder die Trägervorrichtung (12) zwischen dem Führungsmitteln (20,23) und damit entlang der Prozesslinie (2) führen kann.

8. Robotersystem nach Anspruch 7, bei dem das weitere Führungsmittel aus zueinander beabstandeten Führungsflächen (20;23) für den Gegenstand (10,11,15) oder die Trägervorrichtungen (12,14) ausgebildet ist.

9. Robotersystem nach Anspruch 8, bei dem die Führungsflächen (20;23) entlang einer Prozesslinie (19;22,26) angeordnet sind, die linear oder nicht-linear ausgebildet ist.

10. Robotersystem nach Anspruch 9, bei dem die Führungsflächen (20;23) mit Spiel (S) zu dem entlang der Prozesslinie (19;22;26) geführten Gegenstand (10,11,15) oder der Trägervorrichtung (12,14) angeordnet sind.

11. Robotersystem nach Anspruch 6, bei dem sich der Arbeitsraum (9,17,27) und die Prozesslinie (19;22;26) im Wesentlichen auf einer Ebene befinden.

12. Robotersystem nach Anspruch 6, bei dem sich der Arbeitsraum (9,17,27) und die Prozesslinie (19;22;26) in unterschiedlichen Ebenen befinden und das Führungsmittel (29) quer oder geneigt zu der Ebene der Prozesslinie (19;22;26) ausgerichtet ist.

13. Robotersystem nach einem der Ansprüche 6 bis 12, bei dem die Führungsmittel (18;20;23;29) nachgiebig ausgestaltet sind.

14. Robotersystem nach einem der Ansprüche 6 bis 13, bei dem der Roboter (1) ein mobiler Roboter ist.

## Claims

1. Method for controlling a robotic system (1), the robotic system (1) comprising
a process line (2),
at least one robot arm (7) comprising an effector (8),
a working space (9,17,27) being assigned to the robotic system (1) and arranged outside of the process line (2),
and a control unit for controlling the movement of the robot arm (7), in which the robot arm (7) is positionable and orientable in the region of the process line (2), along which an object (10,11,15,24) or a carrier device (12,14) on which the object (10,11,15,24) is arranged is movable,
in which the working space (9,17) having at least two guide means (18,29), which mutually converge towards each other such that an object (10,11,15,24) or a carrier device (12,14) being guided between said two guide means (18,29) are automatically positioned in the correct position with respect to the robotic system (1) for processing,
and in which the robotic system (1) comprises a compliance control,
comprising the steps of:
- for the purpose of processing, compliantly guiding the object (10,11,15,24) or the carrier device (12,14) by means of the robot arm (7) between said two mutually converging guide means (18,29) into the working space (9,17,27) in such a way that the object (10,11,15,24) or the carrier device (12,14) is automatically positioned in the correct position with respect to the robotic system (1);
- processing the object (10,11,15,24) by means of the effector (8); and
- after the processing of the object (10,11,15,24) has been completed, by means of the robot arm (7) guiding the object (10,11,15,24) or the carrier device (12,14) out of the guide means (18;20;23;29) and out of the working space (9,17,27) and back to the process line (2).

2. Method according to claim 1, in which further guide means (20;23) are provided in the region of the process line (19;22) and are spaced from one another, the robot arm (7) guiding the object (10,11,24) or the carrier device (12) between the guide means (20;23) and thus along the process line (2).

3. Method according to claim 1 or 2, in which the step of guiding comprises:
- touching the object (10,11,15,24) or the carrier device (12,14) without connection by means of the effector (8); and
- applying a pull and/or push force to the object (10,11,15,24) or to the carrier device (12,14) by means of the effector (8).

4. Method according to claim 1 or 2, in which the step of guiding comprises:
- captively gripping the object (24) or the carrier device (12, 14) by means of the effector (8); and
- applying a pull and/or push force to the object (24) or to the carrier device (12,14) by means of the effector (8), or
- lifting the object (24) or the carrier device (12,14) by means of the effector (8), transferring it into a working position and setting down the object (24) or the carrier device (12,14) in this working position.

5. Method according to any one of claims 1 to 4, in which the control unit and the robot arm (7) are configured such that a clocking during guiding of the object (10,11,15,24) or the carrier (12,14) is set by the robotic system (1).

6. Robotic system (1) comprising
a process line (2),
at least one robot arm (7) comprising an effector (8),
a working space (9,17,27) being assigned to the robotic system (1) and arranged outside of the process line (2),
and a control unit for controlling the movement of the robot arm (7), in which the robot arm (7) is positionable and orientable in the region of the process line (2), along which an object (10,11,15,24) or a carrier device (12,14) on which the object (10,11,15,24) is arranged is movable,
in which the working space (9,17) having at least two guide means (18,29), which mutually converge towards each other such that an object (10,11,15,24) or a carrier device (12,14) being guided between said two guide means (18,29) are automatically positioned in the correct position with respect to the robotic system (1) for processing,
in which the robotic system (1) comprises a compliance control, and in which the robotic system (1) is adapted to carry out a method according to one of claims 1 to 5.

7. Robotic system according to claim 6, in which further guide means (20;23) are provided in the region of the process line (19;22) and are spaced from one another such that the robot arm (7) can guide the object (10,11,24) or the carrier device (12) between the guide means (20;23) and thus along the process line (2).

8. Robotic system according to claim 7, in which said further guide means is made of spaced apart guiding surfaces (20;23) for the object (10,1115) or the carrier devices (12,14).

9. Robotic system according to claim 8, in which the guiding surfaces (20;23) are arranged along a process line (19;22;26) which is linear or non-linear.

10. Robotic system according to claim 9, in which the guiding surfaces (20;23) are arranged relative to the object (10,11,15) or the carrier device (12,14) being guided along the process line (19;22;26) with clearance (S).

11. Robotic system according to claim 6, in which the working space (9,17,27) and the process line (19;22;26) are substantially located on one level.

12. Robotic system according to claim 6, in which the working space (9,17,27) and the process line (19;22;26) are located on different levels and in which the guide means (29) are orientated traverse or inclined with respect to the level of the process line (19;22;26).

13. Robotic system according to any one of claims 6 to 12, in which the guide means (18;20;23;29) is made resilient.

14. Robotic system according to any one of claims 6 to 13, in which the robot (1) is a mobile robot.

## Revendications

1. Procédé de commande d'un système robotique (1), le système robotique (1) comportant
une ligne de processus (2),
au moins un bras de robot (7) comportant un effecteur (8),
un espace de travail (9, 17, 27) associé au système robotique (1) et associé en outre à la ligne de processus (2) et une unité de commande pour commander le mouvement du bras de robot (7), le bras de robot (7) pouvant être positionné et orienté dans la région d'une ligne de processus (2),
selon lequel le long de la ligne de processus (2) peut se mouvoir un objet (10, 11, 15, 24) ou un dispositif de support (12, 14) sur lequel l'objet (10, 11, 15, 24) est disposé,
selon lequel l'espace de travail (9, 17) comporte au moins deux moyens de guidage (18, 29) qui se déplacent de manière convergente l'un vers l'autre de telle sorte qu'un objet (10, 11, 15, 24) ou un dispositif de support (12, 14) guidé entre les deux moyens de guidage est automatiquement positionné dans la bonne position par rapport au système robotique (1) pour le traitement,
et selon lequel le système robotique (1) comporte un dispositif de réglage de flexibilité,
comportant les étapes suivantes :
- guidage flexible de l'objet (10, 11, 15, 24) ou du dispositif de support (12, 14) au moyen du bras de robot (7) entre les deux moyens de guidage (18, 29) convergeant l'un vers l'autre dans l'espace de travail (9, 17) de telle sorte que l'objet (10, 11, 15, 24) ou le dispositif de support (12, 14) est automatiquement positionné dans la bonne position par rapport au système robotique (1) pour le traitement,
- traitement de l'objet (10, 11, 15, 24) au moyen de l'effecteur (8) et
- après la fin du traitement de l'objet (10, 11, 15, 24), guidage de l'objet (10, 11, 15, 24) ou du dispositif de support (12, 14) au moyen du bras de robot (7) hors de moyens de guidage (18 ; 20 ; 23 ; 29) et de l'espace de travail (9, 17, 27) et retour sur la ligne de processus (2).

2. Procédé selon la revendication 1, selon lequel d'autres moyens de guidage (20 ; 23) sont prévus et espacés entre eux dans la région de la ligne de processus (19 ; 22), le bras de robot (7) guidant l'objet (10, 11, 24) ou le dispositif de support (12) entre les moyens de guidage (20 ; 23) et donc le long de la ligne de processus (2).

3. Procédé selon une des revendications 1 ou 2, selon lequel l'étape de guidage comprend
- la mise en contact sans liaison de l'objet (10, 11, 15, 24) ou du dispositif de support (12, 14) au moyen de l'effecteur (8) et
- l'application d'une force de traction ou de poussée sur l'objet (10, 11, 15, 24) ou sur le dispositif de support (12, 14) au moyen de l'effecteur (8).

4. Procédé selon une des revendications 1 ou 2, selon lequel l'étape de guidage comprend
- l'accrochage imperdable de l'objet (24) ou du dispositif de support (12, 14) au moyen de l'effecteur (8) et
- l'application d'une force de traction ou de poussée sur l'objet (24) ou sur le dispositif de support (12, 14) au moyen de l'effecteur (8) ou
- le levage de l'objet (24) ou du dispositif de support (12, 14) au moyen de l'effecteur (8), la mise dans une position de travail et le dépôt de l'objet (24) ou du dispositif de support (12, 14) dans cette position de travail.

5. Procédé selon une des revendications 1 à 4, selon lequel l'unité de commande et le bras de robot (7) sont configurés de sorte qu'une cadence est prédéfinie pour le guidage de l'objet (10, 11, 15, 24) ou du dispositif de support (12, 14) à travers le système robotique (1).

6. Système robotique (1) comportant
une ligne de processus (2),
au moins un bras de robot (7) comportant un effecteur (8),
un espace de travail (9, 17, 27) associé au système robotique (1) et associé à l'extérieur *** à la ligne de processus (2) et une unité de commande pour commander le mouvement du bras de robot (7), le bras de robot (7) pouvant être positionné et orienté dans la région d'une ligne de processus (2),
dans lequel le long de la ligne de processus (2) peut se mouvoir un objet (10, 11, 15, 24) ou un dispositif de support (12, 14) sur lequel l'objet (10, 11, 15, 24) est disposé et
dans lequel l'espace de travail (9, 17) comporte au moins deux moyens de guidage (18, 29) qui se déplacent de manière convergente l'un vers l'autre de telle sorte qu'un objet (10, 11, 15, 24) ou un dispositif de support (12, 14) guidé entre les deux moyens de guidage est automatiquement positionné dans la bonne position par rapport au système robotique (1) pour le traitement,
lequel système robotique (1) comporte un dispositif de réglage de flexibilité,
et lequel système robotique (1) est configuré pour exécuter un procédé selon une des revendications 1 à 5.

7. Système robotique selon la revendication 6, dans lequel d'autres moyens de guidage (20 ; 23) sont prévus et distants les uns des autres dans la région de la ligne de processus (19 ; 22), de sorte que le bras de robot (7) peut guider l'objet (10, 11, 24) ou le dispositif de support (12) entre les moyens de guidage (20 ; 23) et donc le long de la ligne de processus (2).

8. Système robotique selon la revendication 7, dans lequel l'autre moyen de guidage est constitué de surfaces de guidage (20 ; 23) espacées entre elles pour l'objet (10, 11, 15) ou les dispositifs de support (12, 14).

9. Système robotique selon la revendication 8, dans lequel les surfaces de guidage (20 ; 23) sont disposées le long d'une ligne de processus (19 ; 22, 26) qui est linéaire ou non linéaire.

10. Système robotique selon la revendication 9, dans lequel les surfaces de guidage (20 ; 23) sont disposées avec un certain jeu (S) par rapport à l'objet (10, 11, 15) ou au dispositif de support (12, 14) guidé le long de la ligne de processus (19 ; 22 ; 26).

11. Système robotique selon la revendication 6, dans lequel l'espace de travail (9, 17, 27) et la ligne de processus (19 ; 22 ; 26) se trouvent sensiblement dans un même plan.

12. Système robotique selon la revendication 6, dans lequel l'espace de travail (9, 17, 27) et la ligne de processus (19 ; 22 ; 26) se trouvent dans des plans différents et le moyen de guidage (29) est orienté transversalement ou en biais par rapport au plan de la ligne de processus (19 ; 22 ; 26).

13. Système robotique selon une des revendications 6 à 12, dans lequel le moyen de guidage (18 ; 20; 23 ; 29) est flexible.

14. Système robotique selon une des revendications 6 à 12, dans lequel le robot (1) est un robot mobile.
